# EUROPEAN PATENT APPLICATION

(11) **EP 1 108 579 A2**
(43) Date of publication of application: **20.06.2001**
(21) Application number: 00610131.5
(22) Date of filing: 15.12.2000
(51) Int. Cl.: B60J 5/06

(54) **Folding door system to bodies of cars and lorries**

(30) Priority: 16.12.1999 DK 180899
(71) Applicant: Norfrig Innovation A/S, 8800 Viborg (DK)
(72) Inventor: Salling, Mads, 8800 Viborg (DK)
(74) Representative: Blichfeldt, Mogens Erhardt

(57) **Abstract**

In the use of folding doors, it is possible to work with broad, crossbar-free access openings for various types of box vans with non-fixed frame parts, without broad and heavy swing- or sliding-doors being required. Such a folding door can typically consist of three hinged-together door wings which with moderate breadth can be folded together in a zigzag manner. However, this in itself requires that the door wings are hinged-together in a precise manner and are of a relatively strong and heavy configuration. With the invention, a lightweight configuration is made possible, in that the wings are hinged together with a certain degree of axial play, but on the other hand are provided with individual hand-lever means which make it possible to raise the wings to the correct closed position. There is thus no demand that the innermost wing must be able to support outer wings at the correct closing level, and a locking of the wings in the closed position can be achieved in a simple manner as a result of the raising itself.

## Description

The present invention relates to a folding door arrangement, especially for use in connection with non-fixed frame parts such as in box vans, refrigeration vans, exchange-load containers and corresponding vehicles. With the use of folding doors, it is possible to work with broad, crossbar-free access openings without the need for broad and heavy swingor sliding doors, in that the folding door sections, preferably three sections for folding together in a zigzag, can each be of moderate breadth.

With the known constructions, it is common for the door sections to be fixedly hinged together, and for each to be provided with a vertical locking bar at their outer ends, said locking bar being pivotal by means of a horizontally-extending operating door handle, so that a special locking engagement part on these bars can be brought into and out of locking engagement with locking socket parts at the bottom and the top of the van body.

The overall multi-wing structure must hereby be configured in such a manner that it is supported as a frame, though as a foldable unit on the innermost support hinges, which will typically be disposed on a corner post of the van body, so that also the outer sections of the folding door in folded-out state will be supported at precisely that height which corresponds to their level in the closed position. This requires a precise hinge suspension and a good form stability of the innermost door sections, whereby these - or the door sections in general - must be configured with a relatively strong and herewith heavy construction.

It is endeavoured with the present invention to provide a van body and van door construction which can appear with relatively low weight by a minimising of the weight of the folding door sections. It is a fundamental consideration with the invention that some or each of the outer door sections can be configured with axially-displaceable hinge connections, but on the other hand be equipped with hand-lever means which are operable for the raising of the respective sections by local co-operation with the lower edge area of the van body. An active locking of the sections in the closed position can thus be brought about by the establishing of a simple insertion engagement at the top of the van body.

Consequently, the door sections do not need to be enclosed within frames, nor in any other way be stabilised to be able to support the outer sections at a certain operative height, and the said vertical locking bars can be omitted in favour of the local and far smaller hand-lever. All in all, there is hereby achieved a considerable reduction in cost and weight without any disadvantage regarding the convenience of operation.

In the following, the invention is explained in more detail with reference to the drawing, in which
Fig. 1 A-E are plan views for the illustration of different open/closed positions of a set of folding doors on the side of a van body according to the invention, while
Fig. 2 A-C are cross-sectional views of the same area.

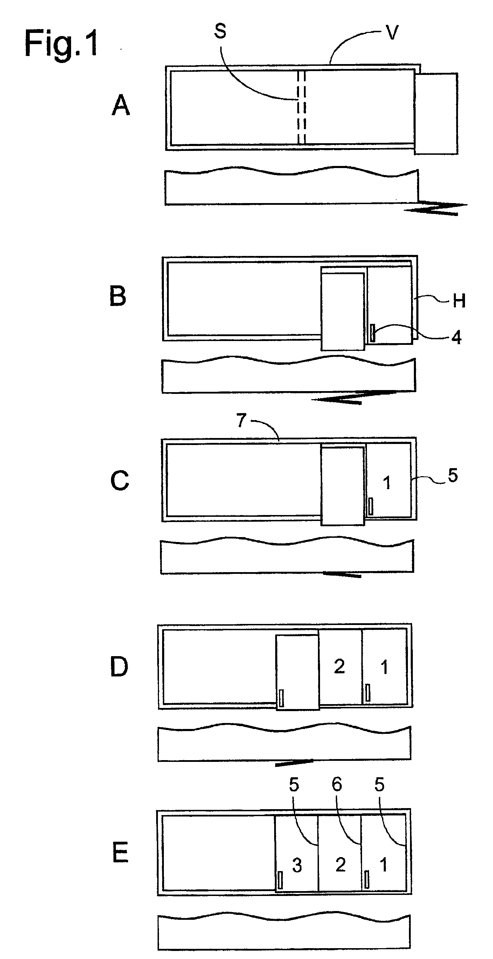

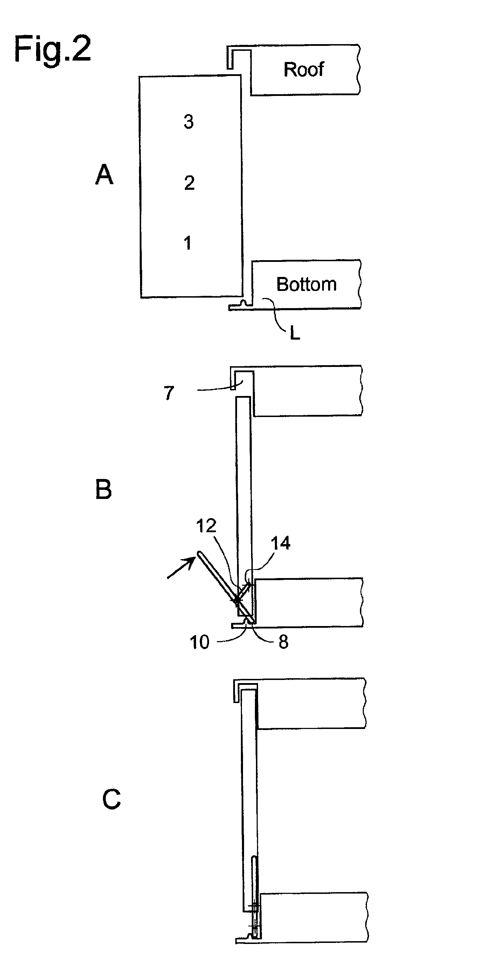

The side of a van body V shown in fig. 1 is completely open, though possibly with a centre frame-bar S, in that each of the two half parts are arranged to be closed with three-winged folding doors, of which only the door at the righthand end is shown. The door, fig. 1E, has three wings 1, 2 and 3, of which the wing 1 is hinged to a corner post H by means of hinges 5, which when the door is open allows the door to assume a lowered position, in which cf. fig. 2A it can extend for a distance down along the side surface of the bottom L of the body, while at the top it is lowered from a locking groove 7 in the edge of the roof of the body.

In the closed, lowered position, this door section can be forcibly raised by means of a hand-lever 4, see especially fig. 2B, which by or with a lower end can be brought into operative engagement with a recess 8 in a flange 10 protruding from the lower edge area of the bottom L of the body. The hand-lever 4 is connected with a link arm 12 to a point 14 of the door, so that by an upwards and inwards swinging of the bar-formed hand-lever, the door is forcibly displaced upwards, namely into locking engagement in the roof groove 7, cf. fig. 2C. At the bottom, the door will be able to be blocked against outwards pressure from the inside by a suitable, not-shown and from the outside operable blocking of the hand-lever in the closed position.

The door wing no. 2 is hinged to wing no. 1 by means of ordinary swing-hinges which do not permit any mutual axial displacement between these wings, i.e. the hand-lever 4 on wing 1 when operated will automatically bring about the same raising or lowering of both of the wings 1 and 2. Wing no. 2 is not provided with a hand-lever 4.

Door wing no. 3 is hinged to wing no. 2 by means of an axially-displaceable hinge connection 5, and this wing is provided with a hand-lever 4 in the same manner as the wing no. 1.

In their closed positions, all three wings will stand as shown in fig. 1E and fig. 2C, i.e. in raised positions in which they are locked by the upper engagement with the roof groove 7. For the opening of the wings, the hand-lever on wing 3 is swung out first, whereby this wing is lowered on the hinges 5 to the position shown in fig. 1D and 2B, from which it can be freely swung out around the hinges 5 for folding-in against wing 2, fig. 1C. Thereafter, the hand-lever 4 on wing 1 fig. 1B is swung out, whereby the sections 1 and 2 are lowered simultaneously, with associated further lowering of the now outwardly-lying section 3. Hereafter, when the hand-lever 4 on section 1 is drawn outwards, a folding-together of the sections 1 and 2 can be effected, whereby the outer section 3 simply follows this as an outer covering on section 2, and all three sections can then be swung out in the folded-together state (fig. 1A) for total opening of the previously covered part of the opening in the side of the van body.

For the closing of the side opening, the reverse procedure is followed, in that the folded-out door wings are swung in and the hand-levers 4 are operated successively for raising and locking of the different sections.

It will be understood that the individual door sections do not hereby need to be dimensioned to take up the weight of that or the outer sections for presentation of all the sections along a rectilinear distance, in that the sections are individually displaceable in height and can herewith be brought into locking engagement in the upper roof groove 7 (fig. 2B).

## Claims

1. Folding door arrangement, especially for use in non-fixed frame parts, with an innermost, frame-hinged door wing, to the free edge of which there is hinged a swing-wing which can correspondingly support one or more additional, serially-hinged swing wings, said arrangement comprising means for stabilising the wings in their folded-out closed position, **characterised** in that one or more of the swing wings extend from their support hinges in a vertically-displaceable manner, and are connected to a hand-lever means which in co-operation with an under-frame part can be operated for the raising of the respective wing(s) for the establishing of insertion engagement between the top of the wings and an upper frame area.

2. Arrangement according to claim 1, **characterised** in that the said support hinges in themselves are configured to enable said vertical displacement.

3. Arrangement according to claim 1, **characterised** in that a pair of neighbouring swing wings are firmly hinged together.

4. Arrangement according to claim 1, **characterised** in that the hand-lever means are disposed in permanent operative connection with the respective wings.

5. Arrangement according to claim 4, **characterised** in that the hand-lever means comprise a pivotal lifting bar which at a lower end can support itself against the upper side of a lower frame, and which is connected by a link to the wing in such a manner that by swinging up around its lower end from an outwards-upwards inclined position to a vertical position, the lifting bar can force the coupled wing to be raised into its locked position.

6. Arrangement according to claim 5, **characterised** in that at its lower end, the lifting bar is disposed behind a fixed raised part on said upper side of the lower frame, and that means are provided for the locking of the lifting bar in its upwardly-swung position, so that the lifting bar also constitutes locking means for the lower end of the wing.

7. Van body with frame parts and a folding door arrangement in accordance with one or more of the foregoing claims.

8. Box van with a van body in accordance with claim 7.
